# EUROPÄISCHE PATENTANMELDUNG

(11) **EP 1 892 508 A1**
(43) Veröffentlichungstag der Anmeldung: **27.02.2008**
(21) Anmeldenummer: 07016578.2
(22) Anmeldetag: 23.08.2007
(51) Int. Cl.: G01J 3/28, G01J 3/44, G02B 5/30, G02B 27/28, G01J 3/02

(54) **Anordnung für ein optisches System für polarisationsabhängige zeitaufgelöste optische Spektroskopie, optisches Messsystem und Verfahren zum polarisationsabhängigen spektroskopischen Untersuchen von Messlicht**

(30) Priorität: 23.08.2006 DE 102006039425
(71) Anmelder: Humboldt-Universität zu Berlin, D-10099 Berlin (DE)
(72) Erfinder: Ernsting, Nikolaus Prof. Dr, 12489 Berlin (DE)
(74) Vertreter: Bittner, Thomas L.

(57) **Zusammenfassung**

Die Erfindung betrifft eine Anordnung für ein optisches System für polarisationsabhängige zeitaufgelöste optische Spektroskopie, insbesondere ein Spektrometer, mit einer einen Kristallpolarisator aufweisenden Polarisationseinrichtung und einem der Polarisationseinrichtung vorgelagerten Lichteinfallsbereich, welcher einen räumlichen Akzeptanzwinkel des Kristallpolarisators umfassend gebildet ist, sowie einem der Polarisationseinrichtung nachgelagerten Lichtaustrittsbereich, wobei ein den Lichteinfallsbereich und den Lichtaustrittsbereich verbindender Zwischenbereich in der Polarisationseinrichtung mit einer von innerhalb des räumlichen Akzeptanzwinkels einfallendem Licht in dem Kristallpolarisator zu durchlaufenden Weglänge von höchstens etwa 4mm gebildet ist. Des weiteren bezieht sich die Erfindung auf ein optisches Meßsystem mit einer Anordnung sowie ein Verfahren zum polarisationsabhängigen spektroskopischen Untersuchen von Meßlicht, insbesondere bei zeitaufgelöster optischer Spektroskopie, bei dem das Meßlicht in einen Lichteinfallsbereich eingekoppelt wird, nach Durchlaufen eines den Lichteinfallsbereich und einen Lichtaustrittsbereich verbindenden Zwischenbereich durch den Lichtaustrittsbereich als polarisiertes Meßlicht austritt und zumindest teilweise auf einen Detektor geführt wird, wobei das Meßlicht in dem Lichteinfallsbereich in einem räumlichen Akzeptanzwinkel eines von einer Polarisationseinrichtung umfaßten Kristallpolarisators und anschließend durch die Polarisationseinrichtung hindurch geführt wird und wobei das Meßlicht in dem Kristallpolarisator entlang einer zu durchlaufenden Weglänge von höchstens etwa 4mm geführt wird.

## Beschreibung

Die Erfindung betrifft eine Anordnung für ein optisches System für zeitaufgelöste optische Spektroskopie, ein optisches Meßsystem sowie ein Verfahren zum polarisationsabhängigen spektroskopischen Untersuchen von Meßlicht, insbesondere bei zeitaufgelöster Spektroskopie.

### Hintergrund der Erfindung

Die Abbildung einer punktförmigen Lichtquelle auf einen Detektor ist ein allgemeines Problem der optischen Meßtechnik. Wenn hierbei Licht aller Farben möglichst gleiche Laufzeiten haben soll, darf der Lichtweg nur eine begrenzte Strecke in brechendem Material verlaufen. Dies ist besonders wichtig, wenn im Blauen oder gar im nahen UV-Bereich gearbeitet wird und ein Zeitfenster Δt ≤ 100 fs (fs = 10⁻¹⁵ s) über alle Farben gleichzeitig herausgeschnitten werden soll. Solche Anordnungen werden in der Ultrakurzzeit-Spektroskopie benötigt. Als typisches Beispiel ist der sogenannte optische Kerr-Schalter zu nennen, der in der zeitaufgelösten Fluoreszenzspektroskopie und in der Raman-Spektroskopie benutzt wird. Ein anderes Beispiel ist die sogenannte "*Fluorescence Upconversion*" bei simultaner Beobachtung aller relevanten Wellenlängen.

Die vorliegende Erfindung betrifft insbesondere alle Arten der optischen Spektroskopie, auch in Verbindung mit Mikroskopie, die sub-Pikosekunden Zeitauflösung von Meßlicht, sei es spontan emittiertes Licht oder transmittiertes Licht, erreichen wollen, bevorzugt unter Verwendung eines optischen Schalters, wobei dieser für effektives Funktionieren zwischen zwei gekreuzten Polarisatoren angeordnet ist. Das Löschungsverhältnis ε = T_{∥} / T┴ des ersten Polarisators mit dem nachfolgenden Polarisator ("Analysator"; T = Transmission dieser Kombination) ist maßgeblich für das Signal-Rauschverhältnis (S/N), also für die Empfindlichkeit der jeweiligen Messung.

Mit Glan-Polarisatoren (GLP) kann die höchste Löschung erreicht werden, ε_{GLP} > 10⁶. Sie funktionieren aufgrund der Doppelbrechung in Kalkspat-Kristallen; ihre Schichtdicke ist prinzipiell etwa so groß wie die Breite des Eingangsfensters, und die Lichtstrahlen dürfen in einem Akzeptanzwinkel nur bis zu ± 2,5° von der Fensternormalen abweichen. Deshalb werden Glan-Polarisatoren nur im parallelisierten Strahlengang verwendet.

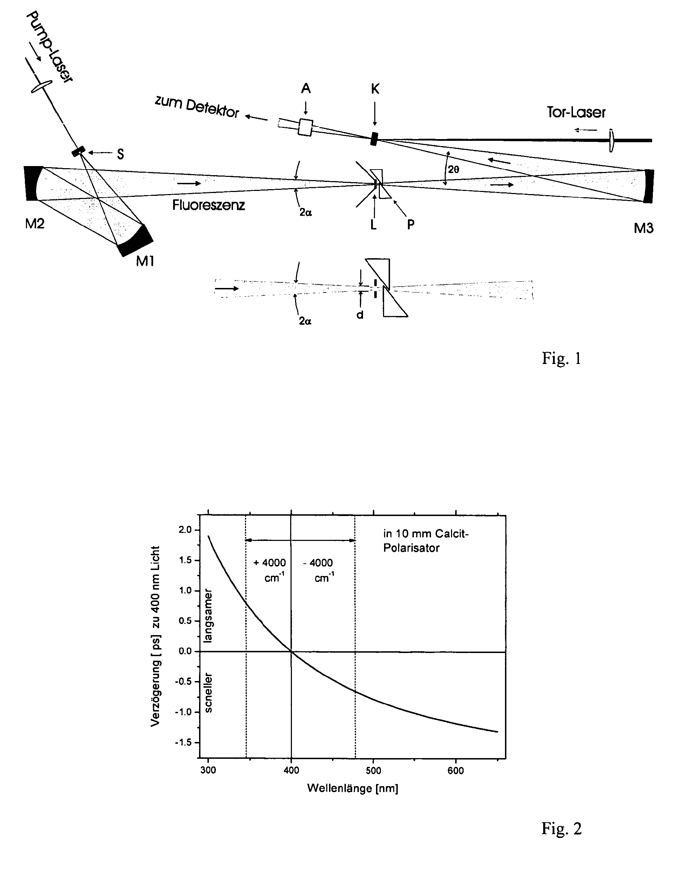

Wenn viel Licht gesammelt werden soll, so ist der parallelisierte Strahldurchmesser naturgemäß groß und damit auch die Schichtdicke des zu durchlaufenden Kalkspats, was Zeitauflösung und Gleichzeitigkeit begrenzt. In Fig. 1 wird untersucht, um wie viele Pikosekunden das Licht bei verschiedenen Wellenlängen einem Referenzimpuls bei 400nm vorauseilt (negative Verzögerung). Dafür wurde angenommen, daß ein 10mm GLP durchlaufen wird. Es ergibt sich, daß der für Biologie interessante Spektralbereich von 320mm bis 450nm über ein Zeitfenster von 2,0ps verschmiert ist. Für ein Zeitfenster von deutlich < 1ps kann das GLP in der üblichen Bauform also nicht genutzt werden.

Die heute üblichen Anordnungen benutzen deshalb sogenannte Wire-Grid-Polarisatoren (WGP), deren Glas-Substrat weniger als 1 mm dick sein kann. Deren Löschungsverhältnis ist aber nur etwa ε_{WGP} ≈ 10³-10⁴, drei Größenordnungen unterhalb der mit GLP erzielbaren Löschung. Entsprechend niedriger ist die Empfindlichkeit einer polarisationsabhängigen Messung. Beispielsweise wird das S/N von zeitaufgelöster Fluoreszenzspektroskopie mit Hilfe eines Kerr-Schalters hauptsächlich durch diesen Mangel begrenzt.

Die Beobachtung von schnell veränderlichen Farben, sei es bei Absorptions- oder Fluoreszenzmessungen ist eine häufig wiederkehrende Meßaufgabe. "Schnell" bedeutet in diesem Zusammenhang eine Zeitauflösung von möglichst unter 100fs. Bei einer Fluoreszenzmessung (vgl. L. Zhao et al., PCCP 7, 1716, 2005) wird ein WGP, gefolgt von einem GLP, zur Unterdrückung von unerwünschtem Untergrund eingesetzt.

### Zusammenfassung der Erfindung

Aufgabe der Erfindung ist es, eine verbesserte Anordnung für ein optisches System für polarisationsabhängige zeitaufgelöste optische Spektroskopie sowie ein verbessertes Verfahren zum polarisationsabhängigen spektroskopischen Untersuchen von Meßlicht anzugeben, mit denen spektroskopische Untersuchungen mit hoher Zeitauflösung in optimierter Art und Weise durchgeführt werden können.

Diese Aufgabe wird erfindungsgemäß durch eine Anordnung für ein optisches System für polarisationsabhängige zeitaufgelöste optische Spektroskopie nach dem unabhängigen Anspruch 1, ein optisches Meßsystem nach dem unabhängigen Anspruch 12 sowie ein Verfahren zum polarisationsabhängigen Messen von Meßlicht nach dem unabhängigen Anspruch 13 gelöst.

Die Erfindung umfaßt den Gedanken, für polarisationsabhängige Spektroskopie mit hoher Zeitauflösung eine Polarisationseinrichtung mit einem Kristallpolarisator zu nutzen, bei dem das einfallende Licht (Meßlicht) in dem Kristallpolarisator eine zu durchlaufende Weglänge von höchstens etwa 4mm durchläuft. Mit Hilfe der Erfindung ist es gelungen, das Signal-Rausch-Verhältnis bei zeitaufgelösten optischen Untersuchungen im Vergleich zu spektroskopischen Messungen, bei denen die vorgeschlagene Polarisationseinrichtung nicht genutzt wurde, um bis zu drei Größenordnungen zu verbessern, ohne die Zeitauflösung zu verringern.

Eine bevorzugte Weiterbildung der Erfindung sieht vor, daß der Zwischenbereich mit einer in dem Kristallpolarisator zu durchlaufenden Weglänge von höchstens etwa 2mm und weiter bevorzugt von höchstens etwa 1mm gebildet ist.

Bei einer zweckmäßigen Ausgestaltung der Erfindung kann vorgesehen sein, daß der Kristallpolarisator ein Glan-Polarisator ist, welcher in einer bevorzugten Ausführung mit zwei Kristallkeilen gebildet ist.

Eine vorteilhafte Ausführungsform der Erfindung sieht vor, daß die in dem Kristallpolarisator zu durchlaufenden Weglänge im Bereich von sich überlappenden Eckbereichen von Kristallkeilen des Kristallpolarisators gebildet ist. Beispielsweise können Kristallkeile aus Kalkspat verwendet werden, wobei die Keilkanten möglichst scharf ausgeführt sind.

Bevorzugt sieht eine Fortbildung der Erfindung vor, daß die Kristallkeile zum Einstellen der in dem Kristallpolarisator zu durchlaufenden Weglänge relativ zueinander verlagerbar sind.

Bei einer vorteilhaften Ausgestaltung der Erfindung kann vorgesehen sein, daß der Polarisationseinrichtung ein optisches Abbildungssystem vorgelagert ist, welches konfiguriert ist, um einfallendes Licht in den räumlichen Akzeptanzwinkel im Lichteinfallsbereich einzukoppeln. Der räumliche-Akzeptanzwinkel ist eine den Kristallpolarisator charakterisierende Kenngröße, die insbesondere materialabhängig ist. Der Akzeptanzwinkel ist für verschiedene Polarisatormaterialien und -ausgestaltungen als solcher bekannt. Das optische Abbildungssystem kann beispielsweise eine Kombination von zwei nichtaxialen Parabolspiegeln umfassen. Auch die Nutzung eines Schwarzschild-Objektivs, welches mit sphärischen Spiegeln axial aufgebaut ist, oder eines hiervon abgeleiteten "Schiefspiegel-Objektivs" kann vorgesehen sein.

Eine Weiterbildung der Erfindung kann vorsehen, daß das optische Abbildungssystem ein vergrößerndes Abbildungssystem mit einem Vergrößerungsverhältnis von mindestens 1:5, bevorzugt von mindestens 1:10 ist.

Eine bevorzugte Weiterbildung der Erfindung sieht vor, daß das optische Abbildungssystem mit mindestens zwei Reflexionseinrichtungen gebildet ist, die jeweils eine gekrümmte Reflexionsfläche aufweisen.

Bei einer zweckmäßigen Ausgestaltung der Erfindung kann vorgesehen sein, daß der Polarisationseinrichtung eine den Lichtdurchmesser beschränkende Blendeneinrichtung vorgelagert ist, die wahlweise der Polarisationseinrichtung in nächster Nähe vorgelagert ist. Hierbei kann die Blendeneinrichtung direkt benachbart zur Polarisationseinrichtung angeordnet sein.

Eine vorteilhafte Ausführungsform der Erfindung sieht vor, daß die in dem Kristallpolarisator zu durchlaufende Weglänge der Größenordnung eines Durchmessers einer Blendenöffnung der Blendeneinrichtung entsprechend gebildet ist.

Bevorzugt sieht eine Fortbildung der Erfindung vor, daß die in dem Kristallpolarisator zu durchlaufende Weglänge etwa gleich dem Wert ist, höchstens etwa dem doppelten Wert des Durchmessers der Blendenöffnung der Blendeneinrichtung entspricht. Als Blendeneinrichtung kann beispielsweise eine Lochblende verwendet werden, wobei der Durchmesser der Blendenöffnung wahlweise verstellbar ausgeführt ist.

Eine Weiterbildung der Erfindung kann bei dem Verfahren vorsehen, daß das Meßlicht in dem Kristallpolarisator entlang einer zu durchlaufenden Weglänge von höchstens etwa 2mm und weiter bevorzugt von höchstens etwa 1mm geführt wird.

Eine bevorzugte Weiterbildung der Erfindung sieht bei dem Verfahren vor, daß das Meßlicht im Bereich von sich überlappenden Eckbereichen von Kristallkeilen durch den Kristallpolarisator geführt wird.

Bei einer zweckmäßigen Ausgestaltung der Erfindung kann vorgesehen sein, daß die zu durchlaufende Weglänge eingestellt wird, indem die Kristallkeile relativ zueinander verlagert werden, sodaß eine Überlappung der sich überlappenden Eck- oder Kantenbereiche verändert wird.

Eine vorteilhafte Ausführungsform der Erfindung sieht vor, daß das Meßlicht mit einem der Polarisationseinrichtung vorgelagerten, optischen Abbildungssystem in den räumlichen Akzeptanzwinkel im Lichteinfallsbereich eingekoppelt wird.

Bevorzugt sieht eine Fortbildung der Erfindung vor, daß als das optische Abbildungssystem ein vergrößerndes Abbildungssystem mit einem Vergrößerungsverhältnis von mindestens 1:5, bevorzugt von mindestens 1:10 verwendet wird.

Bei einer vorteilhaften Ausgestaltung der Erfindung kann vorgesehen sein, daß das Meßlicht durch eine der Polarisationseinrichtung vorgelagerte und den Lichtdurchmesser beschränkende Blendeneinrichtung geführt wird, die wahlweise der Polarisationseinrichtung in nächster Nähe vorgelagert ist.

Eine Weiterbildung der Erfindung kann vorsehen, daß die von dem Meßlicht in dem Kristallpolarisator zu durchlaufende Weglänge der Größenordnung eines Durchmessers einer Blendenöffnung der Blendeneinrichtung entsprechend eingestellt wird.

Eine bevorzugte Weiterbildung der Erfindung sieht vor, daß die von dem Meßlicht in dem Kristallpolarisator zu durchlaufende Weglänge etwa gleich dem Wert, bevorzugt höchstens etwa dem doppelten Wert des Durchmessers der Blendenöffnung der Blendeneinrichtung entsprechend eingestellt wird.

Eine vorteilhafte Ausführungsform der Erfindung sieht vor, daß das Meßlicht mit einem die Polarisationseinrichtung umfassenden, optischen Gerät ausgewählt aus der folgenden Gruppe von optischen Geräten zeitaufgelöst untersucht wird: Resonanz-Raman Spektrometer, zeitauflösende Raman-Spektrometer sowie zeitauflösende Spektrometer für Fluoreszenz, Absorption und diffuse Reflexion.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig. 1: eine schematische Darstellung eines optischen Meßsystems für zeitaufgelöste Spektroskopie; und
- Fig. 2: eine grafische Darstellung der Laufzeitverzögerung in Abhängigkeit von der Wellenlänge in einem 10 mm Glan-Polarisator aus Kalkspat relativ zu einem Referenzimpuls bei einer Wellenlänge von 400 nm.

Fig. 1 zeigt eine schematische Darstellung eines optischen Meßsystems für zeitaufgelöste optische Messungen, beispielsweise Fluoreszenzmessungen.

Ein dispersionsarmes Objektiv, das aus zwei Parabolspiegeln M1 und M2 besteht, bildet die fluoreszierende Zone S stark vergrößernd auf eine Bildebene ab. Dazu werden entweder die zwei Parabolspiegel M1, M2 nichtaxial angeordnet. Alternativ können ein Schwarzschild-Objektiv, welches aus sphärischen Spiegeln axial aufgebaut ist, oder ein davon abgeleitetes "Schiefspiegel-Objektiv" hierfür genutzt werden.

In der Bildebene ist eine Lochblende L angebracht, deren Durchmesser d ist. Von der fluoreszierenden Zone S ausgehendes Fluoreszenzlicht fällt auf die Lochblende L, und nur ein durchgelassene Teil des Fluoreszenzlichtes wird für die nachfolgende Messung verwendet. Umgekehrt bedeutet dies, daß nur ein kleiner Ausschnitt der fluoreszierenden Zone S betrachtet wird. In diesem Sinn ist so eine konfokale Mikroskopie-Anordnung gebildet. Die Anordnung ist auch für Laser-scanning konfokale Mikroskopie bestens geeignet.

Gleich hinter der Lochblende L ist ein dünner Glan-Polarisator P angebracht. Dieser besteht aus zwei Kalkspat-Keilen, die geeignet orientiert und geschnitten sind, d. h. die Kristallachse ist parallel zur Eintrittsfläche und in Richtung des Prismenkeils. Im Gegensatz zur üblichen Ausführung sind die Prismen-Flächen, die einen Winkel von etwa 39° miteinander bilden, jeweils soweit ausgeführt, daß ein scharfer Schnitt der beiden Flächen erfolgt (die sogenannte Keilkante). Die beiden Hypothenusen-Flächen sind überlappend angeordnet (vgl. vergrößerter Ausschnitt in Fig. 1). Die Überlappung ist so, daß eine Schichtdicke resultiert, die von der Größenordnung von d ist. Die von dem Fluoreszenzlicht zu durchlaufende Weglänge wird eingestellt auf höchstens etwa 4mm, bevorzugt auf höchstens etwa 2mm und weiter bevorzugt auf höchstens etwa 1mm oder weniger. Die beiden Prismenkeile können mit Hilfe von Stellgliedern (nicht dargestellt) wie beispielsweise Piezoelementen oder Schrittmotoren relativ zueinander verschoben werden, um die von dem Fluoreszenzlicht zu durchlaufende Weglänge einzustellen. Bevorzugt wird die zu durchlaufende Weglänge einer gewünschten Zeitauflösung der Messung entsprechend eingestellt (vgl. hierzu auch Erläuterungen zu Fig. 2 unten).

Die Vergrößerung mittels der beiden Parabolspiegel M1, M2 ist so gewählt, daß der volle Winkel 2α bei der Lochblende L dem Akzeptanzwinkel α ≤ 2,5° des Glan-Polarisator P entspricht. Je nach Wahl der beiden Parabolspiegel M1, M2 wird ein Vergrößerungsverhältnisse von mindestens 1:5, bevorzugt von mindestens 1:10 verwendet.

Gemäß Fig. 1 sind der dünne Glan-Polarisator P und dessen Kombination mit vergrößernder dispersionsarmer Optik S-M1-M2-L gebildet, um damit den Kontrast eines optischen Schalters K für höchste gleichzeitige Zeitauflösung um den Faktor ε_{GLP} / ε_{WGP} ≈ 1000 zu steigern. Optische Schalter nach dem Kerr-Prinzip oder über Summenfrequenzerzeugung (SFG) sind als solche in verschiedenen Ausführungen bekannt. Der gesamte Schalter besteht bei dem optischen Meßsystem in Fig. 1 aus der Anordnung P-K-A, nämlich dem dünnen Glan-Polarisator P, dem optischen Schalter K und einem Analysator A, welcher ein zu dem Glan-Polarisator P gekreuzter Polarisator aus Kalkspat ist. Hier ist der optische Schalter K ein geeignetes nichtlinear-optisches Medium. Das Licht aus der Lochblende L wird auf den optischen Schalter K abgebildet, und zwar am besten mit einem sphärischen Spiegel M3, der nahezu konfokal benutzt wird. Aber auch andere Anordnungen können vorgesehen sein, zum Beispiel ein elliptischer Spiegel oder zwei Parabolspiegel mit jeweils kleinem Einfallswinkel. Um Astigmatismus zu vermeiden, ist ein Einfallwinkel Θ möglichst klein gehalten.

Wenn der optische Schalter K nicht von einem intensiven Laserpuls beeinflußt wird und der Analysator A gegenüber dem Glan-Polarisator P genau gekreuzt ist, wird im Endeffekt kein Fluoreszenzlicht durch die Einheit P-K-A transmittiert. Genau genommen wird aber durchaus noch einfallendes Restlicht transmittiert, und zwar der Bruchteil 1/ε_{GLP}. Letzteres macht den unvermeidbaren-Untergrund jeder Messung aus. Für die beschriebene Anordnung ist der Untergrund aber nur etwa 1/1000 dessen, was mit üblichen Polarisationsanordnungen für sub-Pikosekunden Zeitauflösung heute erzielt wird. Hinter dem Analysator A befindet sich der Detektor, in der Regel bestehend aus einem Spektrographen und einer empfindlichen Kamera, beispielsweise einer CCD-Kamera.

Ein kurzer Tor-Laserimpuls, dessen Polarisation einen Winkel von etwa 45° gegenüber der durch den Glan-Polarisator P festgelegten Polarisation ausmacht, wird gleichzeitig mit dem Fluoreszenzlicht, zu einem kontrollierten Zeitpunkt, auf das nichtlineare optische Medium des optischen Schalters K gegeben. Dadurch wird die Kombination P-K-A für die kurze Zeit des Tor-Laserimpulses transparent. Das Fluoreszenzlicht wird während dieses Zeitfensters durchgelassen (Kerr-Prinzip) oder konvertiert (SFG - Summenfrequenzerzeugung), aber auch nur während dieser Zeit, wird danach spektral zerlegt und schließlich mit dem Detektor nachgewiesen.

Die Erfindung wird im Folgenden anhand typischer spektroskopischer Anwendungen weiter erläutert.

Fig. 2 zeigt eine grafische Darstellung der Laufzeitverzögerung in Abhängigkeit von der Wellenlänge in einem 10mm Glan-Polarisator aus Kalkspat relativ zu einem Referenzimpuls bei einer Wellenlänge von 400nm. Es ist dargestellt, um wieviele Pikosekunden Licht bei verschiedenen Wellenlängen einem Referenzimpuls bei 400nm folgt (positive Verzögerung, langsamer) oder vorauseilt (negative Verzögerung, schneller). Hierbei ist angenommen, daß ein 10mm GLP aus Kalkspat (Calcit) durchlaufen wird. Allgemein gilt, daß die Verzögerung proportional zur durchlaufenen Weglänge im refraktiven Material ist.

Nachfolgend werden zwei Beispiele diskutiert. In der Raman-Spektroskopie von biologischen Proben ist es einem ersten Beispiel entsprechend zweckmäßig, eine Anregungswellenlänge von etwa 400nm zu nutzen, weil das gesuchte Raman-Signal durch Resonanz oder Präresonanz um Größenordnungen höher als mit rotem Anregungslicht erwartet wird. Der interessante Spektralbereich um 400nm herum umfasst auf der Energieskala ±4000cm⁻¹, was dem Wellenlängenbereich von 344nm bis 476nm entspricht (vertikale gestrichelte Linien in Fig. 2). In 10mm Kalkspat wird dieser Spektralbereich über 1.45ps zeitlich verschmiert. Wenigstens so lang muß ein optisches Tor geöffnet werden, welches das Raman-Signal durchlassen soll. Solche Torverfahren- werden in der Raman-Spektroskopie allgemein eingesetzt, um störenden Fluoreszenz-Untergrund aus der untersuchten Probe zu minimieren. Das durchgelassene Fluoreszenzsignal hängt linear von der Tordauer ab. Im dargestellten Fall wäre die Tordauer mit einem GLP von 1mm Weglänge nur 0.145ps, und der Kontrast des Raman-Signals wäre somit auf das 10-fache erhöht.

Eine andere Methode, Untergrund zu vermeiden, benutzt die Stimulierung des Raman-Signals mit einem kurzen Weißlichtimpuls. Letzterer stellt das effektive zeitliche Tor dar und ist, auf grund der Art seiner Erzeugung, naturgemäß von der Dauer ≤ 150fs. Zeitliche Verbreiterungen dieses Meßlichtes in einem konventionellen GLP führen dazu, daß die Anpassung an den Pumppuls für das Raman-Signal nicht mehr optimal (d. h. für erzielbar hohes Signal) gestaltet werden kann. Auch in diesem Fall ist die Verwendung eines GLP von nur 1mm Schichtdicke des Polarisators ein quantitativer Vorteil.

Einem zweiten Beispiel entsprechend wird bei der Fluoreszenzspektroskopie von biologischen Proben die Emission von Tryptophan (Trp) benutzt. Tryptophan ist die einzige fluoreszierende natürliche Aminosäure, und ihr Fluoreszenzspektrum hängt stark von der Umgebung ab. In diesem Fall umfaßt der interessante Spektralbereich Wellenlängen von 320nm bis 475nm. Mit einem 10mm GLP aus Kalkspat wird die Trp-Fluoreszenz über ein Zeitfenster von 2.0ps verschmiert. Mit einer derartigen Anordnung können die interessanten spektralen Verschiebungen im sub-Pikosekundenbereich nur sehr schwer verfolgt werden. Letztere beinhalten dynamische Information über die Umgebung; wie beispielsweise die Umorientierung von benachbartem Wasser mit einer charakteristischen Zeitkonstante von etwa 1ps. Nur wenn die Kristalldicke des GLP auf etwa 1 mm verringert wird, kann diese Information mit zeitauflösender, polarisationsabhängiger Trp-Fluoreszenzspektroskopie erhalten werden.

Etwa folgende Abschätzung kann für die relevanten biologischen Fragestellungen und entsprechenden Spektralbereiche gegeben werden:
- Eine durchlaufene Länge des GLP Polarisators aus Kalkspat von etwa 4mm erschließt die sub-Pikosekunden Zeitauflösung, d. h. die zeitliche Breite der Apparatefunktion wird etwa 0.5ps.
- Bei einer Weglänge von etwa 2 mm im GLP reicht die Zeitauflösung von etwa 250fs aus, schnelle gedämpfte Bewegung von beispielsweise angelagertem Wasser oder von drehenden Molekülgruppen zu verfolgen.
- Bei einer Weglänge im GLP von etwa 1mm erreicht die Zeitauflösung den 100 fs Bereich. Damit können niederfrequente Molekülschwingungen (bis etwa 300cm⁻¹) anhand einer Frequenzmodulation der Fluoreszenzbande beobachtet werden.

In analoger Weise können aber auch andere spektroskopische Meßlichtarten analysiert werden, beispielsweise Transmissionslicht oder reflektiertes Licht. Es kann auch vorgesehen sein, das zu untersuchende Meßlicht ohne Nutzung eines Abbildungssystems auf den Kristallpolarisator (Glan-Polarisator P) zu geben, wenn eine Einkopplung innerhalb des Akzeptanzwinkels möglich ist.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Anordnung für ein optisches System für polarisationsabhängige zeitaufgelöste optische Spektroskopie, insbesondere ein Spektrometer, mit einer einen Kristallpolarisator (P) aufweisenden Polarisationseinrichtung und einem der Polarisationseinrichtung vorgelagerten Lichteinfallsbereich, welcher einen räumlichen Akzeptanzwinkel des Kristallpolarisators (P) umfassend gebildet ist, sowie einem der Polarisationseinrichtung nachgelagerten Lichtaustrittsbereich, wobei ein den Lichteinfallsbereich und den Lichtaustrittsbereich verbindender Zwischenbereich in der Polarisationseinrichtung mit einer von innerhalb des räumlichen Akzeptanzwinkels einfallendem Licht in dem Kristallpolarisator (P) zu durchlaufenden Weglänge von höchstens etwa 4mm gebildet ist.

2. Anordnung nach Anspruch 1, **dadurch gekennzeichnet, daß** der Zwischenbereich mit einer in dem Kristallpolarisator (P) zu durchlaufenden Weglänge von höchstens etwa 2mm und weiter bevorzugt von höchstens etwa 1mm gebildet ist.

3. Anordnung nach Anspruch 1 oder 2, **dadurch gekennzeichnet, daß** der Kristallpolarisator (P) ein Glan-Polarisator ist.

4. Anordnung nach einem der vorangehenden Ansprüche, **dadurch gekennzeichnet, daß** die in dem Kristallpolarisator (P) zu durchlaufenden Weglänge im Bereich von sich überlappenden Eckbereichen von Kristallkeilen des Kristallpolarisators (P) gebildet ist.

5. Anordnung nach Anspruch 4, **dadurch gekennzeichnet, daß** die Kristallkeile zum Einstellen der in dem Kristallpolarisator (P) zu durchlaufenden Weglänge relativ zueinander verlagerbar sind.

6. Anordnung nach einem der vorangehenden Ansprüche, **dadurch gekennzeichnet, daß** der Polarisationseinrichtung ein optisches Abbildungssystem (M1, M2) vorgelagert ist, welches konfiguriert ist, um einfallendes Licht in den räumlichen Akzeptanzwinkel im Lichteinfallsbereich einzukoppeln.

7. Anordnung nach Anspruch 6, **dadurch gekennzeichnet, daß** das optische Abbildungssystem (M1, M2) ein vergrößerndes Abbildungssystem mit einem Vergrößerungsverhältnis von mindestens 1:5 und bevorzugt von mindestens 1:10.

8. Anordnung nach Anspruch 6 oder 7, **dadurch gekennzeichnet, daß** das optische Abbildungssystem (M1, M2) mit mindestens zwei Reflexionseinrichtungen gebildet ist, die jeweils eine gekrümmte Reflexionsfläche aufweisen.

9. Anordnung nach einem der vorangehenden Ansprüche, **dadurch gekennzeichnet, daß** der Polarisationseinrichtung eine den Lichtdurchmesser beschränkende Blendeneinrichtung (L) vorgelagert ist, die wahlweise der Polarisationseinrichtung in nächster Nähe vorgelagert ist.

10. Anordnung nach Anspruch 9, **dadurch gekennzeichnet, daß** die in dem Kristallpolarisator (P) zu durchlaufende Weglänge der Größenordnung eines Durchmessers einer Blendenöffnung der Blendeneinrichtung (L) entsprechend gebildet ist.

11. Anordnung nach Anspruch 10, **dadurch gekennzeichnet, daß** die in dem Kristallpolarisator (P) zu durchlaufende Weglänge etwa gleich dem Wert ist, bevorzugt höchstens etwa dem doppelten Wert des Durchmessers der Blendenöffnung der Blendeneinrichtung (L) entspricht.

12. Optisches Meßsystem mit einer Anordnung nach einem der vorangehenden Ansprüche, wobei die Anordnung in einem optischen Gerät ausgewählt aus der folgenden Gruppe von optischen Geräten implementiert ist: Resonanz-Raman-Spektrometer, zeitauflösendes Raman-Spektrometer, zeitauflösendes Spektrometer für Fluoreszenz, Absorption und diffuse Reflexion.

13. Verfahren zum polarisationsabhängigen spektroskopischen Untersuchen von Meßlicht, insbesondere bei zeitaufgelöster optischer Spektroskopie, bei dem das Meßlicht in einen Lichteinfallsbereich eingekoppelt wird, nach Durchlaufen eines den Lichteinfallsbereich und einen Lichtaustrittsbereich verbindenden Zwischenbereich durch den Lichtaustrittsbereich als polarisiertes Meßlicht austritt und zumindest teilweise auf einen Detektor geführt wird, wobei das Meßlicht in dem Lichteinfallsbereich in einem räumlichen Akzeptanzwinkel eines von einer Polarisationseinrichtung umfaßten Kristallpolarisators (P) und anschließend durch die Polarisationseinrichtung hindurch geführt wird und wobei das Meßlicht in dem Kristallpolarisator (P) entlang einer zu durchlaufenden Weglänge von höchstens etwa 4mm geführt wird.

14. Verfahren nach Anspruch 13, **dadurch gekennzeichnet, daß** das Meßlicht in dem Kristallpolarisator (P) entlang einer zu durchlaufenden Weglänge von höchstens etwa 2mm und weiter bevorzugt von höchstens etwa 1 mm geführt wird.

15. Verfahren nach Anspruch 13 oder 14, **dadurch gekennzeichnet, daß** das Meßlicht im Bereich von sich überlappenden Eckbereichen von Kristallkeilen durch den Kristallpolarisator (P) geführt wird.

16. Verfahren nach Anspruch 15, **dadurch gekennzeichnet, daß** die zu durchlaufende Weglänge eingestellt wird, indem die Kristallkeile relativ zueinander verlagert werden, sodaß eine Überlappung der sich überlappenden Eckbereiche verändert wird.

17. Verfahren nach einem der Ansprüche 13 bis 16, **dadurch gekennzeichnet, daß** das Meßlicht mit einem der Polarisationseinrichtung vorgelagerten, optischen Abbildungssystem (M1, M2) in den räumlichen Akzeptanzwinkel im Lichteinfallsbereich eingekoppelt wird.

18. Verfahren nach Anspruch 17, **dadurch gekennzeichnet, daß** als das optische Abbildungssystem (M1, M2) ein vergrößerndes Abbildungssystem mit einem Vergrößerungsverhältnis von mindestens 1:5, bevorzugt von mindestens 1:10.

19. Verfahren nach einem der Ansprüche 13 bis 18, **dadurch gekennzeichnet, daß** das Meßlicht durch eine der Polarisationseinrichtung vorgelagerte und einen Lichtdurchmesser beschränkende Blendeneinrichtung (L) geführt wird, die wahlweise der Polarisationseinrichtung in nächster Nähe vorgelagert ist.

20. Verfahren nach Anspruch 19, **dadurch gekennzeichnet, daß** die von dem Meßlicht in dem Kristallpolarisator (P) zu durchlaufende Weglänge der Größenordnung eines Durchmessers einer Blendenöffnung der Blendeneinrichtung (L) entsprechend eingestellt wird.

21. Verfahren nach Anspruch 20, **dadurch gekennzeichnet, daß** die von dem Meßlicht in dem Kristallpolarisator (P) zu durchlaufende Weglänge etwa gleich dem Wert, bevorzugt höchstens etwa dem doppelten Wert des Durchmessers der Blendenöffnung der Blendeneinrichtung (L) entsprechend eingestellt wird.

22. Verfahren nach einem der Ansprüche 13 bis 21, **dadurch gekennzeichnet, daß** das Meßlicht mit einem die Polarisationseinrichtung umfassenden, optischen Gerät ausgewählt aus der folgenden Gruppe von optischen Geräten zeitaufgelöst untersucht wird: Resonanz-Raman-Spektrometer, zeitauflösendes Raman Spektrometer, zeitauflösendes Spektrometer für Fluoreszenz, Absorption und diffuse Reflexion.
